(19) Europäisches Patentamt / European Patent Office / Office européen des brevets

(11) **EP 1 450 560 B1**

(12) **FASCICULE DE BREVET EUROPEEN**

(45) Date de publication et mention
de la délivrance du brevet:
**20.08.2008 Bulletin 2008/34**

(51) Int Cl.:
**H04N 7/01** *(2006.01)* **H04N 5/14** *(2006.01)*
**H04N 5/44** *(2006.01)*

(21) Numéro de dépôt: **04290231.2**

(22) Date de dépôt: **29.01.2004**

(54) **Procédé et dispositif de dé-entrelacement par analyse de pixels**

Verfahren und System zur Unterdrückung des Zeilensprungs durch Pixelanalyse

Method and device for deinterlacing by pixel analysis

(84) Etats contractants désignés:
**DE FR GB**

(30) Priorité: **19.02.2003 FR 0302013**

(43) Date de publication de la demande:
**25.08.2004 Bulletin 2004/35**

(73) Titulaire: **STMicroelectronics S.A.**
**92120 Montrouge (FR)**

(72) Inventeur: **Nicolas, Marina**
**38120 Le Fontanil Cornillon (FR)**

(74) Mandataire: **Bentz, Jean-Paul**
**Novagraaf Technologies**
**122 Rue Edouard Vaillant**
**92593 Levallois-Perret Cedex (FR)**

(56) Documents cités:
**US-A- 5 936 676** **US-A- 5 943 099**

**Description**

La présente invention concerne un procédé et dispositif de dé-entralacement, notamment pour adapter des signaux constitués de champs entrelacés à des systèmes dits de balayage progressif. On rappelle qu'une image vidéo classique est constituée, pour chaque image, de deux champs, dits champ pair et champ impair, qui sont entrelacés sur des lignes alternées. A l'affichage, ces champs sont balayés successivement dans le temps sur l'écran, typiquement un tube cathodique, les lignes du second champ d'une image étant balayées sur les espaces laissés entre les lignes de balayage du premier champ. Par rapport à un balayage progressif, où les lignes successives d'une image complète sont affichées séquentiellement, le balayage par trame entrelacée permet, d'une part de doubler la résolution verticale en gardant la même bande passante ou, à résolution verticale égale de doubler la fréquence de retour de trame et de réduire de ce fait les effets de scintillement.

Les signaux vidéo analogiques et numériques sont généralement formatés sous forme de trames entrelacées, dite "vidéo entrelacée". Il est donc nécessaire de prévoir des systèmes qui convertissent les signaux vidéo entrelacés en vidéo non-entrelacée lorsqu'il est nécessaire de les afficher en mode de balayage progressif. Ce dernier est utilisé notamment dans les dispositifs d'affichage adressables ligne par ligne tels que les écrans à plasma, à cristaux liquides, à diodes électroluminescentes organiques, etc. qui utilisent par exemple un réseau matriciel d'électrodes.

De tels systèmes, dits de "dé-entrelacement" doivent produire toutes les lignes affichées d'une image à partir d'un seul champ des deux champs qui la composent. Or, un champ ne contenant qu'une ligne sur deux de l'image, le dé-entrelacement fait appel à des techniques d'interpolation qui permettent de déterminer le contenu des lignes manquantes sur la base du contenu de leurs lignes voisines et le cas échéant des champs voisins.

De manière classique, la sortie interpolée du signal de-entrelacé est composée à partir d'une interpolation spatiale et d'une interpolation temporelle selon une pondération variable. La contribution de chacune de ces deux interpolations dans la composition est généralement variable sur une plage comprenant les deux cas extrêmes, à savoir respectivement 100% d'interpolation spatiale et 100% d'interpolation temporelle. La décision en question consiste alors à déterminer les pondérations respectives d'interpolation spatiale et temporelle dans la constitution du signal interpolé en sortie. Cette détermination est réalisée par un mélangeur, plus généralement connu par l'appellation anglo-saxonne de "fader", qui reçoit en entrée les deux types d'interpolation et produit en sortie le signal interpolé avec les pondérations précitées.

Dans l'entrelacement de base, les lignes manquantes sont dans la plupart des cas interpolées par filtrage spatial passe-bas des lignes voisines existantes. On utilise une technique de fusion de champs lorsque le support est un film, car on sait alors qu'un champ impair suivi par le champ pair correspondant sont liés à la même position temporelle ou qu'un champ pair suivi par le champ impair correspondant sont lies à la même position temporelle, les systèmes de détection de film permettant d'identifier l'une ou l'autre des situations. De manière plus générale, on peut employer l'interpolation temporelle dans le cas d'une image fixe. Cela présente l'avantage d'éviter des pertes inutiles de définition provoquées par le filtrage spatial passe bas.

Dans la plupart des systèmes de dé-entrelacement qui utilisent à la fois l'interpolation temporelle et l'interpolation spatiale, une décision est prise une fois par champ, en général en prenant l'option la plus sûre, basée sur une détection du film.

Cela implique que le filtrage temporel n'est utilisé que si l'on détecte l'image complète comme statique. Ceci mène souvent à des artefacts de commutation, où l'image a un bon piqué lorsque tout est immobile, mais le perd dès qu'un mouvement apparaît.

Par ailleurs, on évolue vers des contenus vidéos dans lesquels on insère des parties statiques, tels que des logos dans des images en mouvement ou du texte défilant, sur une image quasiment statique. Dans ce cas, il est souhaitable d'utiliser une interpolation plutôt spatiale dans certaines parties de l'image et une interpolation plutôt temporelle dans d'autres. Il existe également des sources où certaines parties de l'image ont un contenu vidéo alors que d'autres parties proviennent d'un film.

Il en résulte que dans tous les systèmes de dé-entrelacement nécessitant une détection de film, le dé-entrelacement n'est pas optimal sur toute l'image.

Des systèmes de dé-entrelacement sophistiqués à compensation de mouvement souffrent également de cette dernière limitation.

Il est connu du document US-A-5 943 099, un système d'interpolation avec décision entre une interpolation spatiale et temporelle en fonction d'une mesure de la corrélation de déplacement, de la corrélation verticale et de la corrélation temporelle-verticale, ces mesures étant comparées à des valeurs de consigne prédéterminées. Par ailleurs, il est connu du document US-A-5 936 676 une technique d'interpolation qui combine trois types d'interpolation: l'interpolation spatio-temporelle guidée par les bords bougeant, l'interpolation verticale par les lignes horizontales qui bougent dans le sens vertical et l'interpolation temporelle par les parties localement statiques.

Au vu de ce qui précède, l'invention propose un système de dé-entrelacement dont l'avantage principal comparativement à d'autres est qu'elle ne nécessite pas un haut niveau de performance au niveau du système de détection du support, quelque soit ce dernier (film, vidéo, ou mélange des deux). La mise en oeuvre de l'invention est également bien moins onéreuse que les solutions sophistiquées à compensation de mouvement, également basées sur une détection du support.

Plus particulièrement, l'invention propose, selon un premier objet, un procédé de dé-entrelacement d'un signal vidéo, dans lequel on produit en sortie un signal d'images vidéo dé-entrelacées par interpolation des pixels manquants du signal vidéo entrelacé présenté en entrée, l'interpolation sur le signal en sortie étant composée sélectivement à partir d'une interpolation spatiale et d'une interpolation temporelle avec prise de décision sur le degré variable de présence d'interpolation spatiale et d'interpolation temporelle dans ledit signal en sortie, cette décision étant prise en fonction d'une détection de mouvement dans la zone concernée de l'image,

caractérisé en ce que cette décision est prise en outre en fonction d'une détection du détail dans une zone concernée de l'image.

Avantageusement, la décision est prise pour chaque pixel individuel interpolé.

Dans le mode de réalisation préféré, l'interpolation spatiale est réalisée sur la base d'une détermination de la direction, parmi un ensemble de directions considérées reliant des pixels sur des lignes différentes d'une fenêtre de pixels donnée, pour laquelle on obtient le minimum de différence entre les valeurs des pixels sur les lignes différentes ainsi reliés le long de cette direction, où l'une des directions considérées correspond à un angle de sensiblement 26° et/où un angle de sensiblement 63° par rapport la verticale, pour une géométrie à pas de pixel égal dans les sens vertical et horizontal.

Avantageusement, l'interpolation spatiale est réalisée sur la base d'une détermination de la direction, parmi un ensemble de directions considérées reliant des pixels sur des lignes différentes d'une fenêtre de pixels donnée, pour laquelle on obtient le minimum de différence entre les valeurs des pixels sur les lignes différentes ainsi reliés le long de cette direction, où lorsqu'il existe plusieurs directions produisant le même minimum de différence entre les valeurs des pixels ainsi reliés, on sélectionne la direction verticale ou, le cas échéant, la direction la plus proche de la direction verticale.

L'interpolation spatiale peut être réalisée sur la base d'une détermination de la direction, parmi un ensemble de directions considérées reliant des pixels sur des lignes différentes d'une fenêtre de pixels donnée, pour laquelle on obtient le minimum de différence entre les valeurs des pixels sur les lignes différentes ainsi reliés le long de cette direction, où lorsqu'il existe deux directions symétriques diamétralement opposées produisant le même minimum de différence entre les valeurs des pixels ainsi reliés, et faisant en sorte qu'aucune des deux directions ne soit plus proche de la direction verticale que l'autre, on sélectionne à la place la direction verticale.

L'interpolation spatiale peut être réalisée sur la base d'un moyennage de valeurs de pixels, où l'on prend les mêmes positions de pixels pour déterminer à la fois le moyennage de la composante de luma du signal vidéo entrelacé en entrée et le moyennage de la composante de chroma, dans la mesure où les mêmes pixels sont disponibles pour les deux composantes.

L'interpolation spatiale peut être réalisée sur la base d'une détermination de la direction, parmi un ensemble de directions considérées reliant des pixels sur des lignes différentes d'une fenêtre de pixels donnée, pour laquelle on obtient le minimum de différence entre les valeurs des pixels sur les lignes différentes ainsi reliés le long de cette direction, où la détermination est réalisée sur la composante luma du signal vidéo entrelacé en entrée, et en ce que la direction ainsi déterminée est également utilisée comme direction d'interpolation pour la composante chroma de ce signal vidéo.

Avantageusement, la détection de mouvement est réalisée, pour un pixel donné, par un calcul récursif mettant en oeuvre un rebouclage d'une valeur intermédiaire de valeur de mouvement avec atténuation d'un facteur FA inférieur à 1.

De préférence, la valeur de mouvement M est déterminée pour un pixel à interpoler X d'un champ m par application de l'algorithme suivant :

M0=max (|A-D|, FA*M (N))
Mp=min (M(N1), M(N1+1))
M=max (M0, Mp);

où :

A est le pixel à la même position que le pixel X, mais dans le champ m+1,
D est le pixel à la même position que le pixel X, mais dans le champ m-1,
M(N) correspond a la valeur M0 calculée une trame avant, soit N lignes avant, N étant le nombre total de lignes de l'image.

M(N1) correspond à la valeur M0 calculée N1 lignes avant, où

N1 = (N-1)/2 dans le cas où N est impair

N1 = (N-2)/2 dans le cas où N est pair et où les lignes de luma à interpoler sont les 2èmes, 4èmes etc. lignes de l'image,

N1 = N/2 dans le cas où N est pair et où les lignes de luma à interpoler sont les 1ères, 3èmes etc. lignes de l'image,

M(N1+1) correspond à la valeur M0 calculée (N+1) lignes avant, et

FA est le facteur d'atténuation.

De préférence, le facteur d'atténuation FA est égal à 15/16.

La pondération peut être déterminée sur la base de la composante luma du signal vidéo.

L'interpolation déterminée sur la composante luma du signal vidéo est obtenue par l'algorithme suivant :

I=med(s,t+M,t-M) si M≤d

sinon I=s.

où I représente l'interpolation finale,

s représente l'interpolation spatiale,

t représente l'interpolation temporelle,

M représente la mesure de mouvement à la position à interpoler,

d représente la mesure de détail à la position à interpoler, et

med(a,b,c) représente la fonction médian de a, b, c.

La sélection réalisée sur la base de la composante luma du signal peut être aussi appliquée à la composante chroma.

De préférence :

i) dans le cas où l'interpolation finale sur la luma est plus proche de l'interpolation temporelle, l'interpolation finale de la chroma est l'interpolation temporelle ; et/ou

ii) dans le cas où l'interpolation finale sur la luma est plus proche de l'interpolation spatiale, l'interpolation finale de la chroma est l'interpolation spatiale ; et/ou

iii) lorsque les interpolations spatiale et temporelle ont une égale contribution dans l'interpolation finale de la luma, les interpolations spatiale et temporelle ont une égale contribution dans l'interpolation finale de la chroma.

Selon un deuxième aspect, l'invention concerne un appareil de dé-entrelacement d'un signal vidéo, produisant en sortie un signal d'images vidéo dé-entrelacées par interpolation des pixels manquants du signal vidéo entrelacé présenté en entrée (E), l'appareil comprenant des moyens pour réaliser l'interpolation sur ledit signal en sortie par composition sélective à partir d'une interpolation spatiale et d'une interpolation temporelle avec prise de décision sur le degré variable de présence d'interpolation spatiale et/ou d'interpolation temporelle dans ledit signal en sortie, ces moyens prenant ladite décision en fonction d'une détection de mouvement dans la zone concernée de l'image,

caractérisé en ce que les moyens prennent ladite décision en outre en fonction d'une détection du détail dans une zone concernée de l'image.

Les moyens cités peuvent déterminer la pondération pour chaque pixel individuel interpolé.

L'appareil précité peut comprendre des moyens programmés pour réaliser le procédé selon le premier aspect.

Selon un troisième aspect, l'invention concerne un appareil de visualisation vidéo à affichage par balayage séquentiel pouvant fonctionner à partir de signaux vidéo entrelacés en entrée, caractérisé en ce qu'il comprend un appareil selon le deuxième aspect pour réaliser le dé-entrelacement permettant d'obtenir les signaux de balayage séquentiel.

L'invention et les avantages qui en découlent apparaîtront plus clairement à la lecture de la description qui suit des modes de réalisation préférés, donnés purement à titre d'exemples non-limitatifs par référence aux dessins annexés, dans lesquels :

- la figure 1 est un schéma fonctionnel d'un système de dé-entrelacement conforme à l'invention ;
- la figure 2 est une représentation de pixels sur de trois lignes et couvrant trois champs successifs intervenant dans l'interpolation temporelle conformément à l'invention ;
- la figure 3 est une représentation de pixels sur une fenêtre de trois lignes et cinq colonnes d'un même champ intervenant dans l'interpolation spatiale conformément à l'invention ;
- les figures 4a à 4g reprennent chacune la représentation de la figure 3 en indiquant respectivement une direction d'interpolation spatiale possible, à savoir : verticale (figure 4a), diagonale à +26°, diagonale à +45° (figure 4b), diagonale à +63° (figure 4c), diagonale à diagonale à -26° (figure 4d), diagonale à -45° (figure 4e), et diagonale à -63° (figure 4g) ;
- la figure 5 est une représentation de pixels sur de trois lignes et couvrant cinq champs successifs intervenant dans la détection de mouvement conformément à l'invention ; et

- la figure 6 est un schéma fonctionnel des éléments permettant une mise en oeuvre d'un algorithme de détection de mouvement conformément à la présente invention.

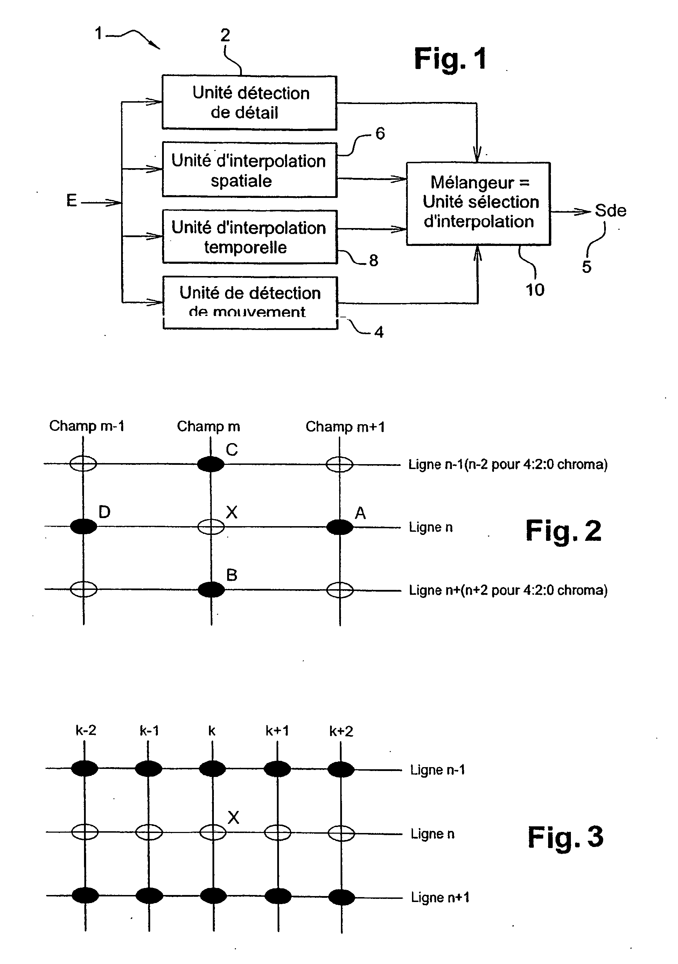

Un schéma bloc du système de dé-entrelacement 1 selon le mode de réalisation préféré de l'invention est donné par la figure 1.

Ce système 1 accepte en entrée E les champs successifs d'un signal vidéo entrelacé, chaque champ correspondant à une demi image vidéo en contenant une ligne sur deux en alternance sur toute cette image. En sortie S, le système produit, pour chaque champ d'entrée, une image vidéo complète en remplissant les lignes absentes du champ grâce à une technique d'interpolation. Cette technique d'interpolation peut utiliser des informations provenant de plusieurs champs successifs, notamment du champ précédant et du champ successif. Cela peut impliquer un délai d'une période égale à un champ dans la sortie, mais on garde néanmoins le bilan d'une image vidéo complète en sortie par champ présenté en entrée. Le signal en sortie S est ainsi apte à être exploité sur un écran à balayage progressif, tel qu'un écran plasma, à cristaux liquides et autres dispositifs d'affichage matriciels, ainsi que certains types de tube cathodique spécialement conçus pour ce type de balayage.

Au niveau fonctionnel, les champs vidéo entrelacés présentés à l'entrée E du système sont transmis simultanément et en parallèle à quatre unités :

- une unité de détection de détail 2,
- une unité de détection de mouvement 4,
- une unité d'interpolation spatiale 6, et
- une unité d'interpolation temporelle 8.

Les sorties de ces quatre unités 2-6 sont présentées en entrée d'une unité de sélection d'interpolation 10, également désigné par le terme de mélangeur (ou "fader" en terminologie anglo-saxonne), qui produit à sa sortie S le signal dé-entrelacé Sde du système 1 pour exploitation.

L'unité de sélection d'interpolation 10 produit son signal de sortie S à partir des interpolations spatiales et temporelles disponibles sur ses entrées. Plus particulièrement, ce signal de sortie est de composition variable sur une plage de 100% d'interpolation spatiale à 100% d'interpolation temporelle, la contribution de chacune des ces composantes étant fixée par des coefficients de pondération respectivement Ps et Pt pour les interpolations spatiales et temporelles. En jouant sur ces coefficients, l'unité de sélection peut produire des mélanges d'interpolation entre ces deux extrêmes, d'où la désignation de mélangeur. Pour déterminer les pondérations - et donc le taux de mélange des deux interpolations dans le signal de sortie - l'unité évalue pour le pixel de l'image concerné non seulement l'information sur le mouvement telle que fournie par l'unité de détection de mouvement 4, mais aussi l'information sur le détail, telle que fournie par l'unité de détection de détail 2.

Les coefficients de pondération entre les interpolations spatiale et temporelle peuvent être établis à partir de la formule du médian :

med (t-M, t+M, s), où t et s sont respectivement ..., les valeurs des interpolations temporelle et spatiale et M la valeur de la mesure du mouvement

Ces formules son bien connues dans le domaine et ne seront pas analysées ici par souci de concision.

Dans la pratique, on peut réaliser un filtre médian à faible coût en termes de structure matérielle ("hardware"), alors que le calcul exact des coefficients de pondération suivi de leur application pour calculer l'interpolation finale est généralement plus coûteux.

De la même façon, pour déterminer quelle pondération devra être prépondérante, on utilise la valeur calculée de l'interpolation finale et on compare directement la différence entre cette interpolation et l'interpolation spatiale d'une part et la différence entre cette interpolation finale et l'interpolation temporelle d'autre part.

L'unité de sélection d'interpolation 10 est capable de commuter - c'est-à-dire sélectionner les pondérations - à chaque pixel du signal, conférant ainsi la possibilité de choisir la composition de l'interpolation en sortie la plus adaptée pour chaque pixel individuel interpolé.

Dans le mode de réalisation préféré le système 1:

- l'unité d'interpolation spatiale 6 opère par détection de transitions, en association à une fiabilité spatiale. L'avantage de ce système est que la fiabilité spatiale provient naturellement de la détection de transitions elle-même ;
- l'unité de détection de mouvement 4 prend en compte les effets dynamiques perceptuels de changements de mouvements locaux dans une scène. Par comparaison à d'autres systèmes, la détection de mouvement est prévue pour rendre, en combinaison avec la fiabilité spatiale et la décision basée sur le pixel, le meilleur compromis entre la résolution verticale et la variation de performances dans le cas de changements de mouvements locaux ; et

- l'unité sélection (ou de décision) 10 met en oeuvre une logique floue au niveau de chaque pixel, qui prend en compte la fiabilité spatiale et la détection de mouvement pour commander un commutateur de sélection de sortie entre l'interpolation spatiale et temporelle. L'avantage du système est qu'il est robuste vis-à-vis d'une détection de mouvement erronée, telle qu'elle peut se produire notamment lors d'un défilement rapide de texte. La décision basée sur le pixel permet d'obtenir au niveau local les meilleures performances de dé- entrelacement, quelque soit le support à la source (vidéo, film, ou mélange).

Un but important recherché dans le transfert d'un contenu vidéo entrelacé vers un support progressif est l'élimination des artéfacts tels que le scintillement, ou le "rampage" de ligne (connu également par le terme anglo-saxon de "line crawling", qui sont inhérents à un système à balayage avec entrelacement.

L'algorithme proposé ne nécessite pas de détection du film. En effet, la combinaison de l'interpolation spatiale directionnelle et de l'interpolation temporelle, commandées par des décisions sur la base du pixel, permet d'obtenir un dé-entrelacement optimisé localement.

Un autre point faible des systèmes existants de dé-entrelacement adaptatif basés sur le pixel est qu'ils produisent des décisions basées uniquement sur l'estimation de mouvement. De la sorte, ils avouent leurs limites dès que l'estimation de mouvement est prise en faute, ce qui se produit notamment lors d'un défilement rapide de texte, provoquant des artéfacts fort pénibles à supporter.

Le système conforme à l'invention ne souffre pas d'une telle limitation grâce à sa capacité de décision basée sur le pixel, qui utilise à la fois l'estimation de mouvement et la fiabilité de l'interpolation spatiale.

La fiabilité de l'interpolation spatiale est donnée pour rien dans l'interpolation spatiale car elle est dérivée directement de la détection de transition.

L'algorithme conforme à l'invention est également remarquable, relativement aux systèmes classiques d'entrelacement qui utilisent un estimateur de mouvement, par le fait que ce dernier, dans le cas de l'invention, prend en compte les effets de perception dynamiques des changements de mouvements. En combinaison avec la décision basée sur le pixel, l'algorithme conforme à l'invention assure qu'aucun artefact de commutation n'apparaisse dans l'image lorsqu'un objet se met à bouger ou cesse de bouger dans l'image.

**Formats vidéo.**

Le système de dé-entrelacement conforme à l'invention peut gérer les formats YUV 4:2:2 et YUV 4:2:0, dérivés de la norme numérique YCRCB. Dans le principe, le système pourrait s'appliquer aux sources YUV 4 :4 :4, mais ces sources YUV font figure d'exception, et en général, ne peuvent être gérés par les blocs de traitement ("processing en terminologie anglo-saxonne) qui suivent traditionnellement un dé-entrelacement. Le présent système de dé-entrelacement ne modifie pas le format. Les composantes U et V sont co-situées et subissent toujours le même traitement l'une par rapport à l'autre. Aussi désignera-t-on par la suite la composante UV solidairement, plutôt que de faire référence séparément aux composantes U et V.

Dans ce qui suit, on utilise les désignations suivantes :

- m est le numéro de champ. Les valeurs impaires de m correspondent aux champs comprenant les 1eres, 3emes etc. lignes de l'image complète et les valeurs paires de m correspondent aux champs comprenant les 2emes, 4emes etc. lignes de l'image complète ;
- le numéro de ligne est n en commençant par 1 en haut de l'image, jusqu'au nombre total de lignes dans la trame complète. Dans les champs impairs, Y n'est défini que pour les valeurs impaires de n ; dans les champs pairs, Y n'est défini que pour les valeurs paires de n. Le système de dé-entrelacement effectue une interpolation sur les lignes paires des champs impairs et sur les lignes impaires des champs pairs ;
- la position de colonne est donnée par un nombre k commençant par 1 pour le pixel situé le plus à gauche. On suppose que k est un nombre pair.

Pour les entrées 4:2:2,

- dans les champs impairs : on définit UV pour chaque n impair et pour chaque k impair, et
- dans les champs pairs : on définit UV pour chaque n pair et chaque k impair.

Le système de dé-entrelacement interpole UV,

- dans les champs impairs : pour chaque n pair et chaque k impair dans les champs impairs et
- dans les champs pairs : pour chaque n impair et chaque k impair.

Pour les entrées 4:2:0,

- dans les champs impairs : on définit UV pour n = 1, 5, 9, ... et pour chaque k impair, et
- dans les champs pairs, on définit UV pour n = 3, 7, 11 et pour chaque k impair.

Le système de dé-entrelacement interpole UV :

- dans les champs impairs : pour n = 3, 7, 11, ... et chaque k impair, et
- dans les champs pairs : pour n = 1, 5, 9 et chaque k impair.

Les lignes d'origine sont gardées sans modification; seules les lignes manquantes sont interpolées. Ceci permet de garder tout au long du traitement la structure de champ, et de ne basculer vers une structure de trame qu'à la sortie du dé-entralaceur. On remarque que dans les algorithmes faisant appel a des filtres polyphases, tels que ceux typiquement utilises dans les algorithmes de zoom , les lignes d'origine sont également modifiées.

Le fait d'utiliser le détail de l'image comme l'un des critères de sélection de l'interpolation est avantageux par rapport aux techniques de sélection basées sur le simple critère de détection de mouvement, car il permet de rattraper des éventuelles défaillances dans la détection de mouvement.

Pour chaque pixel, on estime :

- la valeur que prendrait le pixel s'il était interpolé intégralement de manière spatiale,
- la valeur que prendrait le pixel s'il était interpolé intégralement de manière temporelle,
- la fiabilité de l'interpolation spatiale dans la détection de détail, et
- la fiabilité de l'interpolation temporelle dans la détection de mouvement.

Dans le bloc de sélection de sortie, les deux fiabilités précitées sont comparées pour commander la commutation floue ("fuzzy switching" en terminologie anglo-saxonne) qui mélange les deux interpolations pour produire la valeur finale en sortie.

**L'interpolation temporelle.**

Le principe de l'interpolation temporelle est représenté à la figure 2.

L'interpolation du pixel manquant X est t=(A+D)/2, où A et D sont les pixels à la même position respectivement dans le champ suivant et le champ précédant. L'interpolation temporelle introduit un retard égal à un champ dans le système.

Pour la luma Y, cette formule est valable pour tout k et tout n pair dans les champs impairs, et pour tout k et tout n impair dans les champs pairs.

Pour les chromas 4:2:2, la formule est valable pour tout k impair et tout n pair dans les champs impairs, et pour tout k impair et tout n impair dans les champs pairs.

Pour les chromas 4:2:0, la formule est valable pour tout k impair et n=3,7,11,.. dans les champs impairs, et pour tout k impair et n=1,5,9, ... dans les champs pairs.

**L'interpolation spatiale.**

L'interpolation spatiale consiste à rechercher la meilleure direction pour l'interpolation, cette recherche étant effectuée au sein d'une fenêtre de 5*3 pixels, comme le montre la figure 3.

L'approche consiste à rechercher la direction pour laquelle les modifications entre la ligne n-1 et la ligne n+1 sont minimales.

A titre d'exemple, si les différences entre les pixels aux positions (n-1,k-2) et (n+1,k-2), (n-1,k-1) et (n+1,k-1), (n-1,k) et (n+1,k), (n-1, k+1) et (n+1,k+1), (n-1, k+2) et (n+1,k+2) tendent à être plus grandes que les différences entre les pixels aux positions (n-1,k) et (n+1,k-2), (n-1,k+1) et (n+1,k-1), (n-1,k+2) et (n+1,k), alors il apparaîtra plus logique d'interpoler le pixel manquant à la position (n,k) en tant que la moyenne des pixels aux positions (n-1,k+1) et (n+1, k-1), plutôt que de considérer les pixels aux positions (n-1,k) et (n+1,k).

La fenêtre de 5*3 pixels permet d'effectuer la recherche dans le sens vertical et dans trois directions diagonales sur chaque côté.

Pour chaque direction K, on calcule la somme pondérée des différences absolues ("sum of absolute differences" en terminologie anglo-saxonne) SAD(K) :

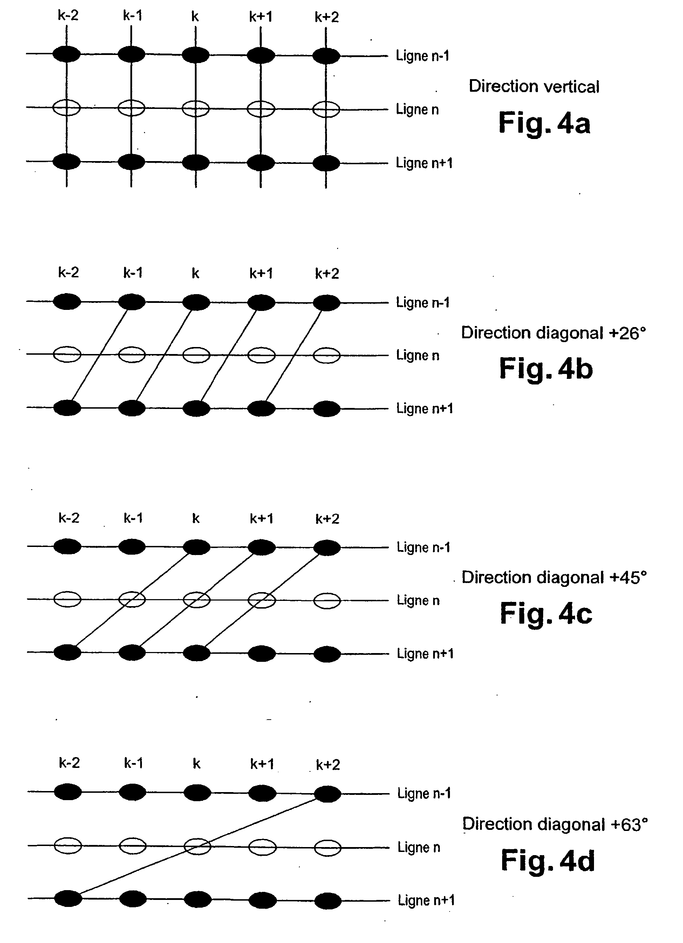

- direction verticale (K=0), cf. figure 4a :

$$SAD(0) = 0,125*|Y(n-1,k-1)-Y(n+1,k-1|+0,75*|Y(n-1,k)-Y(n+1,k)|+0,25*|Y(n-1,k+1)-Y(n+1,k+1)|.$$

- direction diagonale à 26° (K=1), cf. figure 4b

$$SAD(1) = 0,1875*|Y(n-1,k-1)-Y(n+1,k-2)|+0,3125*|Y(n-1,k)-Y(n+1,k-1)|+0,3125*|Y(n-1,k+1)-Y(n+1,k)|+0,1875*|Y(n-1,k+2)-Y(n+1,k+1)|.$$

- direction diagonale à 45° (K=2), cf. figure 4c

$$SAD(2) = 0,3125*|Y(n-1,k)-Y(n+1,k-2)|+0,375*|Y(n-1,k+1)-Y(n+1,k-1)|+0,3125*|Y(n-1,k+2)-Y(n+1,k)|.$$

- direction diagonale à 63° (K=3), cf. figure 4d

$$SAD(3) = |Y(n-1,k+2)-Y(n+1,k-2)|.$$

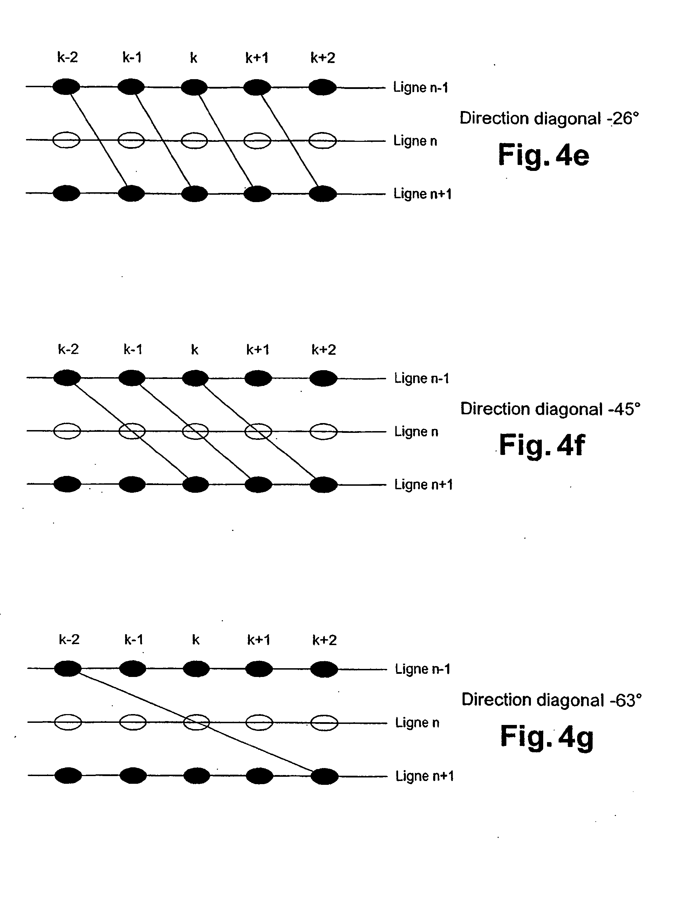

- direction diagonale -26° (K=-1), cf. figure 4e

$$SAD(-1) = 0,1875*|Y(n+1,k-1)-Y(n-1,k-2)|+0,3125*|Y(n+1,k)-Y(n-1,k-1)|+0,3125*|Y(n+1,k+1)-Y(n-1,k)|+0,1875*|Y(n+1,k+2)-Y(n-1,k+1)|.$$

- direction diagonale -45° (K=-2), cf. figure 4f

$$SAD(-2) = 0,3125*|Y(n+1,k)-Y(n-1,k-2)|+0,375*|Y(n+1,k+1)-Y(n-1,k-1)|+0,3125*|Y(n+1,k+2)-Y(n-1,k)|.$$

- direction diagonale - 63° (k=-3), cf. figure 4g :

$$SAD(-3) = |Y(n+1,k+2)-Y(n-1,k-2)|.$$

La meilleure direction pour l'interpolation est celle qui correspond à la valeur SAD minimale.

La recherche est effectuée uniquement pour la composante Y. La meilleure direction trouvée est ensuite appliquée également pour l'interpolation spatiale de la chroma, comme suit :

- pour une chroma 4:2:2 à une position donnée (n,k), on applique la décision rendue pour la luma à la position (n,k) ;
- pour un chroma 4:2:0, UV n'est pas en co-site avec la luma Y. A une position donnée, on applique la décision rendue pour l'échantillon luma le plus proche, c'est-à-dire juste en dessous dans le champ impair, ou juste au-dessus dans le champ pair.

L'avantage de disposer d'une recherche de meilleure direction indépendante pour la chroma est limité :

- les entrées chroma ne sont disponibles que pour les valeurs de k impaires. Il devient alors difficile de déterminer avec précision laquelle des directions, de la verticale à $\pm 63°$ est la meilleure ;
- on bénéficie de l'interpolation directionnelle principalement au niveau des transitions. Or dans les images vidéo naturelles, les transitions de chroma correspondent le plus souvent aux positions des transitions de luma ;
- la décision d'atténuation est de toute façon basée sur la composante luma, puisqu'il est tout à fait irréaliste d'obtenir une détection de mouvement sur la base de la chroma.

Les interpolations spatiales Ys et UVs sont définies comme suit.
Pour la luma Y :

Si min(SAD)=SAD(0) alors Ys1=(Y(n-1,k)+Y(n+1,k))/2
Si min(SAD)=SAD(1) alors Ys1=(Y(n-1,k)+Y(n+1,k-1)+Y(n-1,k+1)+Y(n+1,k))/4
Si min(SAD)=SAD(2) alors Ys1=(Y(n-1,k+1)+Y(n+1,k-1))/2
Si min(SAD)=SAD(3) alors Ys1=(Y(n-1,k+2)+Y(n+1,k-2))/2
Si min(SAD)=SAD(-1) alors Ys1=(Y(n-1,k-1)+Y(n+1,k)+Y(n-1,k)+Y(n+1,k+1))/4
Si min(SAD)=SAD(-2) alors Ys1= (Y(n-1,k-1)+Y(n+1,k+1))/2
Si min(SAD)=SAD(-3) alors Ys1=(Y(n-1,k-2)+Y(n+1,k+2)/2

Enfin Ys est donné par : Ys=Ys1 si Ys1 entre Y(n-1,k) et Y(n+1,k),

```
sinon Ys=(Y(n-1,k)+Y(n+1,k)/2.
```

Ce dernier cas permet avantageusement d'éviter qu'il se produise des artefacts de discontinuités sur des transitions subtiles. De telles discontinuités sont désagréables, notamment en présence d'un défilement de texte.
La formule est valable pour tout k et tout n pair dans les champs impairs, et pour tout k et tout n impair dans les champs pairs.

**Pour la chroma 4:2:2:**

Si min(SAD)=SAD(0) alors :

```
Vs1=(UV(n-1,k)+UV(n+1,k))/2.
```

Si min(SAD)=SAD(1) alors :

```
UVs1=(3*UV(n-1),k)+UV(n+1,k-2)+
UV(n-1,k+2)+3*UV(n+1,k))/8.
```

Si min(SAD)=SAD(2) alors :

```
UVs=(UV(n-1,k)+(UV(n-1,k+2)+
UV(n+1,k-2)+UV(n+1,k))/4.
```

Si min(SAD)=SAD(3) alors

$$\mathtt{UVs1=(UV(n-1,k+2)+UV(n+1,k-2))/2.}$$

Si min(SAD)=SAD(-1) alors :

$$\mathtt{UVs1=(UV(n-1,k-2)+3*UV(n+1,k)+}$$
$$\mathtt{3*UV(n-1,k)+UV(n+1,k+2))/8.}$$

Si min(SAD)=SAD(-2) alors :

$$\mathtt{UVs1=(UV(n-1,k-2)+(UV(n-1,k)+}$$
$$\mathtt{UV(n+1,k)+UV(n+1,k+2))/4.}$$

Si min(SAD)=SAD(-3) alors

$$\mathtt{UVs1=(UV(n-1,k-2)+UV(n+1,k+2))/2.}$$

Enfin, UVs est donné par : UVs= UVs1 si UVs1 entre UV(n-1,k) et UV(n+1, k),

$$\mathtt{sinon\ UVs=(UV(n-1,k)+UV(n+1,k))/2.}$$

Cette formule est valable pour tout k impair et pour tout n pair dans les champs impairs, et pour tout k impair et tout n impair dans les champs pairs.

**Pour la chroma 4:2:0:**

Par application de la décision prise pour le luma le plus proche, on obtient :

Si min(SAD)=SAD(0) alors UVs1=(UV(n-2,k)+UV(n+2,k))/2;
Si min(SAD)=SAD(1) alors

$$\mathtt{UVs1=(UV(n-2,k)+UV(n+2,k-2)+UV(n-2,k+2)}$$
$$\mathtt{+UV(n+2,k))/4.}$$

Si min(SAD)=SAD(2) alors

$$\mathtt{UVs1=(UV(n-2,k+2)+UV(n+2,k-2))/2.}$$

Si min(SAD)=SAD(3) alors

$$\mathtt{UVs1=(UV(n-2,k+4)+UV(n+2,k-4))/2.}$$

Si min(SAD)=SAD(-1) alors

$$UVs1=(UV(n-2,k-2)+UV(n+2,k)+$$
$$UV(n-2,k)+UV(n+2,k+2))/4.$$

Si min(SAD)=SAD(-2) alors

$$UVs1=(UV(n-2,k-2)+UV(n+2,k+2))/2;$$

Si min(SAD)=SAD(-3) alors

$$UVs1=(UV(n-2,k-4)+UV(n+2,k+4))/2.$$

Enfin, UVs est donné par :

UVs=UVs1 si UVs1 est entre UV(n-2,k) et UV (n+2, k),
sinon UVs=(UV(n-2,k)+UV(n+2,k))/2.

La formule est valable pour tout k impair et n=3,7,11,... dans les champs impairs, et pour tout k impair et n=1,5,9,... dans les champs pairs.

**Cas de minima multiples.**

En cas de présence de plusieurs valeurs de SAD minimum égales, on choisit la direction la plus proche de la direction verticale. Lorsque deux directions symétriques (par exemple K=1 et K=-1) donnent la valeur minimale de SAD, on peut considérer que le calcul de SAD ne permet pas d'obtenir une sélection fiable d'une direction dominante, et on se replie sur l'interpolation verticale.

**Choix de la fenêtre.**

Le choix de la taille de la fenêtre égale à 5*3 (en pixels) procure un bon compromis. Par géométrie, la largeur de la fenêtre limite l'angle d'interpolation (à 63°). Dans la pratique, il apparaît qu'il est rarement utile de disposer d'une fenêtre plus large pour reconstruire des transitions diagonales et qu'augmenter la fenêtre n'aide guère à la reconstruction de transitions presque horizontales.

Des essais avec un format de fenêtre allant jusqu'a 19*3 pixels ont été effectués. Il apparaît alors que la valeur minimale de SAD correspond rarement à un angle supérieur à 63°, même dans les cas de transitions presque horizontales. Une explication serait que pour des angles importants, les pixels pris en compte pour le calcul de la SAD sont éloignés les uns des autres, de sorte que la probabilité qu'ils donneront une SAD minimale est relativement faible. D'un autre côté, l'interpolation faite en moyennant des pixels éloignés entre eux est assez risquée. En fait, le système contribue à éliminer la plupart des situations de transitions diagonales , mais n'est pas à même de bien reconstruire des transitions quasi horizontales, même avec une fenêtre large. En particulier, dans le cas d'une transition horizontale quasi parfaite, on ne trouve aucune SAD minimale, et le choix le plus sûr est alors d'interpoler verticalement (k=0).

L'accroissement de la hauteur de la fenêtre ne conduit pas non plus à une amélioration des performances. La raison principale en est que si l'on étend simplement la définition de la SAD sur plus de lignes, le système recherche alors des transitions avec une pente fixe sur plusieurs lignes, et perd sa capacité à reconstruire des transitions courbes.

On retient que l'interpolation directionnelle produit ses bénéfices surtout sur des transitions. Au sein d'un objet, la précision de la direction est moins critique. Si l'objet n'a pas de détail, alors tous les SAD seront proches de zéro et toute direction d'interpolation sera acceptable. Si l'objet comporte de nombreux détails ou de la texture, il est important d'éviter de créer de fausses corrélations, entre pixels voisins, qui pourraient affecter l'aléa du détail ou la cohérence de la texture. Pour ces raisons, il est préférable d'utiliser une fenêtre de dimensions plutôt réduites.

**Calcul de SAD.**

Le choix des pondérations données à l'ensemble des différence absolues pour le calcul des SAD n'est pas critique. Toutefois, il est désirable de donner plus de poids à la différence entre les pixels qui sont les plus proches du pixel manquant. Dans la pratique, on choisit des coefficients faciles et peu coûteux à implémenter dans un circuit intégré.

**Choix de la direction d'interpolation.**

La direction d'interpolation est simplement choisie comme celle qui correspond a la SAD minimale. Dans le cas de minima multiples, on choisit la direction K ayant la plus petite valeur absolue. Comme variante, on peut envisager d'inclure les valeurs de tous les pixels concernés dans le calcul de l'interpolation spatiale. Dans la pratique, cette approche est d'intérêt limité, alors qu'elle met en oeuvre un calcul plus complexe. En cas de doute, la direction la plus sûre est dans le sens vertical, car elle exploite les pixels les plus proches du pixel manquant. En cas de minima multiples, il s'avère que les directions trouvées sont uniformément bonnes (par exemple au sein d'une zone dépourvue de détails), et le choix est alors indifférent. Si les directions trouvées sont uniformément mauvaises, il est probable que l'interpolation temporelle sera plus fiable et que l'unité de sélection d'interpolation 10 limitera les éventuels artefacts de l'interpolation spatiale erronée.

**Fiabilité de l'interpolation spatiale - mesure du détail.**

La SAD minimale fournit également une information sur la fiabilité de l'interpolation spatiale, et peut être utilisée directement comme une "mesure de détail" basique: plus la mesure de détail est élevée, moins la fiabilité sera élevée.

Une autre approche consiste à définir la mesure du détail d comme la différence absolue entre les deux pixels utilisés pour l'interpolation. Dans le cas de |K|=1, on prend :

- pour K=1, d=(|Y(n-1,k+1)+Y(n-1,k)-Y(n+1,k)-Y(n+1,k-1)|)/2.
- pour k=-1, d=(|Y(n-1,k-1)+Y(n-1,k)+Y(n+1,k)-Y(n+1,k+1)|)/2.

La mesure de détail n'est effectuée que sur Y, puisque la décision pour l'unité de sélection d'interpolation 10 n'est prise que pour Y.

On recherche une mesure de détail qui soit bien équilibrée avec la détection de mouvement, afin d'obtenir un bon fonctionnent du commutateur de sélection. Les deux mesures du détail précitées satisfont à cette condition.

On notera que la SAD n'est plus une mesure de détail adéquate lorsque les pondérations données à l'ensemble des différences absolues entre les pixels qui sont les plus proches du pixel manquant dans le SAD ne sont pas plus élevées que les autres (notamment pour le cas de K=0).

**Détection de mouvement**

La première raison d'utiliser l'unité de sélection d'interpolation 10 avec choix de sortie entre l'interpolation spatiale et l'interpolation temporelle est de prévenir les artefacts dynamiques et de réduire la contribution de l'interpolation temporelle si nécessaire. Dans la pratique, la perte de définition est considérée comme plus acceptable pour la plupart des observateurs.

L'atténuation est alors contrôlée avant tout à partir d'une mesure de mouvement. Le but de la mesure est de donner une mesure de la fiabilité de l'interpolation temporelle.

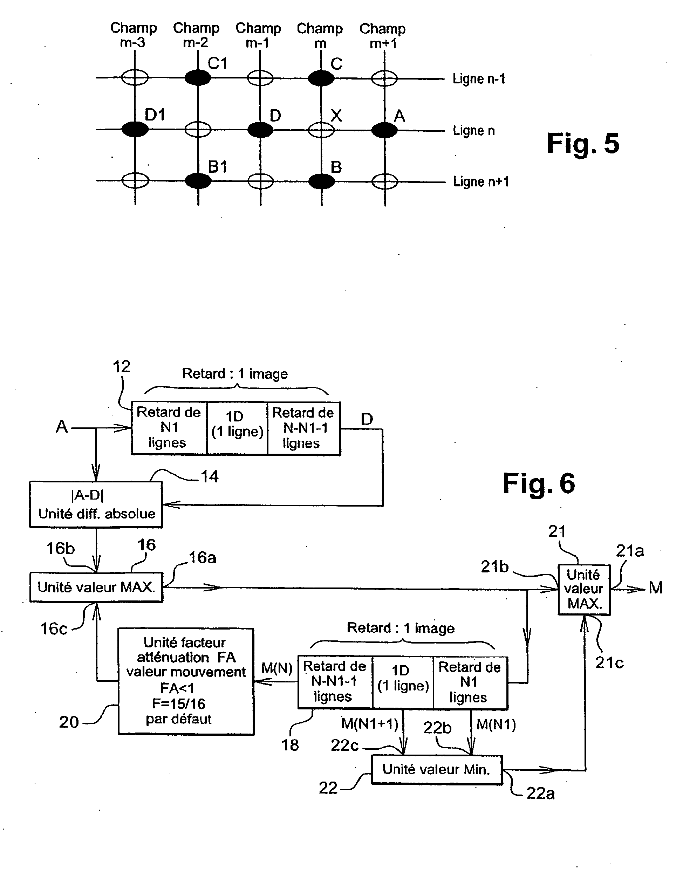

La figure 5 illustre une fenêtre de 3*5 pixels utilisée pour la détermination d'un mouvement D autour d'un pixel X, situé dans le champ m et à la ligne n et à la colonne k. Cette fenêtre occupe trois lignes : n-1, n et n+1 et cinq champs : m-3, m-2,m-1,m et m+1.

Dans les expressions qui figurent ci-après, on utilise les désignations suivantes :

A = pixel dans le champ m+1, à la ligne n et à la colonne k
B = pixel dans le champ m , à la ligne n+1 et à la colonne k
B1 = pixel dans le champ m-2 , à la ligne n+1 et à la colonne k
D = pixel dans le champ m-1, à la ligne n et à la colonne k
D1 = pixel dans le champ m-3 , à la ligne n et à la colonne k
C = pixel dans le champ m , à la ligne n-1 et à la colonne k,
C1 = pixel dans le champ m-2, à la ligne n-1 et à la colonne k.

(Les désignations A, B, B1, D, D1, C, C1 correspondent en fait aux valeurs des pixels respectifs.)

Dans cette approche, le mouvement autour d'un pixel X peut être considéré comme le médian des différences absolues |A-D|, |B-B1|, |C-C1|. Dans la pratique, cependant, on mise sur la sécurité et on veut que l'unité de sélection d'interpolation s'oriente davantage vers l'interpolation spatiale dès que l'interpolation temporelle devient trop douteuse Cela peut s'effectuer au moyen d'une estimation du mouvement maximal autour du pixel X :

$$M=\max(|A-D|,|D-D1|, \text{médian}(|A-D|,|B-B1|,|C-C1|).$$

Ce qui précède peut être formulé de manière équivalente comme suit :

$M0=\max(|A-D|,|D-D1|)$
$Mp=\min(|B-B1|,|C-C1|)$
$M=\max(M0,Mp).$

Un inconvénient de cette mise en oeuvre réside dans le fait qu'elle requiert quatre mémoires de champ, alors que $|D-D1|)$, $|B-B1|$ et $|C-C1|$ ont préalablement été calculés pour l'évaluation du mouvement pour les champs précédents.

Un autre inconvénient est que les effets dynamiques perceptifs ne sont pas bien pris en compte. En particulier, lorsqu'un objet cesse de bouger, la mesure de mouvement tend vers zéro, l'unité de sélection d'interpolation va aller de façon soudaine vers l'interpolation temporelle, provoquant une augmentation brusque de la résolution, ce qui nécessite une adaptation oculaire de la part de l'observateur. D'un autre côté, le système doit réagir rapidement lorsqu'un objet se met à bouger, même au prix d'une perte de résolution.

Aussi est-il proposé la mise en oeuvre récursive suivante.

$$M0=\max(|A-D|, FA*M(N))$$

$$Mp=\min(M(N1),M(N1+1))$$

$$M=\max(M0,Mp),$$

où :

A est le pixel à la même position que le pixel X, mais dans le champ m+1,
D est le pixel à la même position que le pixel X, mais dans le champ m-1,
M(N) correspond a la valeur M0 calculée une trame avant, soit N lignes avant, N étant le nombre total de lignes.

M(N1) correspond à la valeur M0 calculée N1 lignes avantoù N1 = (N-1)/2 dans le cas où N est impair

N1 = (N-2)/2 dans le cas où N est pair et où les lignes de luma à interpoler sont les 2èmes, 4èmes etc lignes de l'image
N1 = N/2 dans le cas où N est pair et où les lignes de luma à interpoler sont les 1ères, 3èmes etc lignes de l' image
M(N1+1) correspond à la valeur M0 calculée ( N1+1) lignes avant..., et
FA est le facteur d'atténuation (par défaut 15/16 ).

La figure 6 représente de manière symbolique un système de mesure de mouvement permettant de réaliser cet algorithme. En entrée de ce système est présenté une valeur de pixel A, en l'occurrence le pixel de même désignation sur la fenêtre représentée à la figure 5 du champ m+1 et à la ligne n. Le pixel désigné X, appartenant à la même ligne n mais au champ m, correspond au pixel pour lequel on estime le mouvement. On note que le pixel A existe au niveau du signal entrelacé en entrée, alors que le pixel X, situé au même emplacement mais sur le champ précédant, est absent du signal d'entrée, et sa valeur doit être interpolée.

Le pixel A est soumis à un retard égal à :

N1 lignes,
typiquement 240 lignes en NTSC numérique, 288 lignes en PAL ou SECAM numériques par un premier élément de retard 12. Dans la figure, ce retard est schématisé par un retard d'un champ, suivi d'un retard d'une ligne, puis d'un champ (.

La sortie de cet élément de retard correspond ainsi au pixel D de la figure 5. Les pixels A et D sont présentés à une unité de calcul de la différence absolue 14, qui établit la partie |A-D| de l'expression M0=max (|A-D|, 15/16*M(N)).

Une première unité de détermination de valeur maximum 16, qui produit en sortie 16a la plus grande des deux valeurs présentées à des entrées respectives 16b et 16c, recueille sur l'une de ces entrées 16b la sortie |A-D| de l'unité 14 et sur l'autre 16c une valeur issue d'une boucle de rétroaction depuis sa sortie 16a. Cette ligne introduit le caractère récursif de l'analyse du mouvement. Plus particulièrement, cette ligne comprend un second élément de retard 18, identique au premier 12, dont l'entrée reçoit la donnée M0, présente à la sortie 16a de la première unité de détermination de valeur maximum. La sortie retardée d'une image M(N) du second élément de retard 18 est présentée en entrée d'une unité de d'application de gain 20 qui applique un facteur d'atténuation FA de 15/16 sur sa valeur algébrique de mouvement. Cette valeur ainsi réduite de M(N) est appliquée à le seconde entrée 16c de l'unité de détermination de valeur maximum 16.

En sortie de la boucle de rétroaction , une seconde unité de détermination de valeur maximum 21 produit la valeur M à sa sortie 21a. Cette valeur correspond au maximum entre d'une part la donnée M0 présentée à une première entrée 21b de cette unité et la donnée issue d'une unité de détermination de valeur minimum 22, présenté à sa seconde entrée 21c. L'unité de détermination de valeur minimum 22 produit à sa sortie 22a celle des deux données M(N1) et M(N1+1) présentées sur des entrées respectives 22b et 22c ayant la valeur minimale. La donnée M(N1) correspond au mouvement calculé entre les pixels B1 et B de la figure 5. Cette disposition évite de stocker le champ m-2 qui serait autrement nécessaire pour déterminer cette valeur de mouvement. La donnée M(N1+1) correspond à la valeur de mouvement entre C et C1, calculée une ligne plus tôt.

De la sorte, la sortie de la valeur M correspond à M0, sauf si l'une des valeurs M(N1) ou M(N1+1) lui est supérieure, dans lequel cas la sortie M correspondra à la moindre de ces deux valeurs, conformément aux conditions établies ci-dessus pour l'algorithme.

Le facteur d'atténuation FA de 15/16, inférieur à 1, permet d'obtenir la convergence de l'algorithme et de produire le comportement dynamique recherché. D'autres valeurs de FA peuvent être envisagées selon les applications et les paramétrages du système.

Des essais ont montré qu'une trop forte réduction du facteur d'atténuation, c'est-à-dire l'atténuation excessive de la valeur M(N), peut conduire à des artefacts dynamiques. Cela s'explique par le fait que lorsque l'on diminue le facteur d'atténuation, le M final tend à être inférieur et n'est plus bien en adéquation avec la mesure de détail dans le mélangeur de sortie. On obtient alors des petits groupes de pixels ou des pixels isolés, qui sont plutôt interpolés temporellement, alors qu'ils devraient être interpolés spatialement.

On note que la valeur de M est utilisée pour une prise de décision, et non pas en tant que donnée qui influe directement sur la valeur interpolée. Le délai de convergence est acceptable, voire même désirable. D'un côté, on peut en tirer un avantage, car ce délai empêche un basculement soudain de l'interpolation spatiale à l'interpolation temporelle lorsque des parties de l'image deviennent immobiles, ce qui constitue un artefact majeur courant avec les algorithmes mixtes temporaux et spatiaux. Pour l'oeil, les changements brusques de netteté sont perçus comme irritants et fatigants pour son système d'adaptation. D'un autre côté, des changements soudains d'une interpolation temporelle à une interpolation spatiale sont susceptibles de se produire lorsque des parties de l'image se mettent en mouvement. Cependant, ce choix reste raisonnable pour éviter les artefacts dynamiques qui sont perçus comme encore plus désagréables que des changements brusques de définition.

En conclusion, la mesure de mouvement proposée est surtout dédiée à la commande de l'unité de sélection d'interpolation 10 pour le système proposé.

**Commutation pour la sélection de sortie entre une interpolation spatiale et une interpolation temporelle.**

**Décision sur la luma.**

L'objet de l'unité de sélection d'interpolation 10 est de décider, pour chaque pixel, si l'interpolation produite en sortie doit être du type temporelle ou spatiale. Cette décision est prise sur la luma.

L'algorithme donne pour l'interpolation finale sur la luma :

I=med(s,t+M,t-M) si M≤d

sinon I=s.

où: I représente l'interpolation finale
s, représente l'interpolation spatiale
t, représente l'interpolation temporelle,
M, représente la mesure de mouvement à la position à interpoler,
d, représente la mesure de détail à la position à interpoler et
med(a,b,c), représente la fonction médian de a, b, c.

Ce système a l'avantage d'être très robuste vis-à-vis d'une détection erronée de mouvement, surtout dans le cas d'un défilement rapide de texte. Cela s'explique par le fait que, contrairement aux autres systèmes de dé-entrelacement adaptatifs travaillant sur des pixels, les décisions dépendent non seulement sur l'estimation de mouvement, mais également de la fiabilité de l'interpolation spatiale.

**Comportement de l'unité de sélection d'interpolation vis-à-vis de la chroma.**

Pour les pixels de chroma, de façon rigoureuse, la formule qui précède ne peut pas être appliquée directement à la chroma. On vise en fait à ce que la chroma suive la décision prise pour la luma le plus proche, à chaque position de pixel.

Si l'on considère l'interpolation luma finale, on constate qu'elle peut toujours être écrite par l'expression;

$$I=a(d,M)*t+(1-a(d,M)*s, \quad avec \quad a(d,M) \quad entre \quad 0 \quad et \quad 1.$$

Une possibilité serait de calculer la valeur de a pour chaque pixel et d'appliquer cette valeur à l'interpolation de la chroma.

Cependant, cela est relativement coûteux en termes de ressources du système, car nécessitant un diviseur. Par ailleurs, la valeur de a dans la formule pour le luma n'est pas non plus calculée de manière très précise en dehors des conditions limites

$a(d,M)=1$ pour $M=0$

$a(d,M)=0$ pour $M>d$.

En fait, les paramètres (t-M) ou (t+M) sont de simples valeurs faciles à calculer entre les interpolations temporelles et spatiales.

Donc, pour la chroma, on établit les critères suivants pour déterminer si l'interpolation utilisée en sortie doit être plutôt spatiale ou temporelle :

- si la valeur finale de l'interpolation pour la luma est la plus proche de celle de l'interpolation spatiale, on sélectionne l'interpolation spatiale pour le chroma ;
- si la valeur finale de l'interpolation pour le luma est la plus proche de celle de l'interpolation temporelle, on sélectionne l'interpolation temporelle pour la chroma ;
- si la valeur finale de l'interpolation pour le luma est exactement la moyenne des deux interpolations, on sélectionne l'interpolation spatiale pour la chroma, qui est la plus sûre.

En variante, on peut appliquer la formule de la luma moyennant une légère perte de performances, on peut aussi utiliser systématiquement l'interpolation spatiale pour la chroma, ce qui permet de réduire la capacité de mémoire de champ nécessaire pour l'interpolation temporelle, moyennant une perte de performances sur la chroma.

**Initialisation.**

**Démarrage de la séquence.**

Le système fonctionne avec un retard d'un champ en raison de l'interpolation temporelle et du calcul du mouvement. De fait de ce retard, les champs 1 et 2 sont disponibles pour la reconstruction du champ 1.

Au début de la séquence, la mouvement M0 est initialisée à 0.

Pour l'interpolation temporelle du champ 1, on ne dispose pas de l'information du champ précédent. A la place de cette information manquante, on utilise la première information disponible. Comme le montre la figure 5, le paramètre D est remplacé par A, ce qui donne une interpolation temporelle égale à A. Ensuite, le mouvement initial correspondant est 0, donnant lieu à une interpolation temporelle pure pour le premier champ (en fait une fusion de champ).

Pour l'interpolation du champ 2, l'interpolation temporelle peut s'effectuer normalement. Le mouvement ira à |A-D|. Cela signifie que les artefacts dynamiques susceptibles de se produire pour l'interpolation du champ 1 auront déjà presque disparus de l'interpolation du champ 2. L'existence d'un champ avec la mauvaise interpolation au début n'est guère perceptible.

**Bords de l'image.**

**Première ligne luma du champ pair.**

La première ligne pour l'interpolation spatiale du champ pair est la ligne 1. Pour l'interpolation de cette ligne, on ne dispose pas de l'information de la ligne supérieure. On propose d'utiliser à la place l'information de la première ligne disponible, c'est-à-dire celle de la ligne 2. Cela implique que l'interpolation spatiale de la ligne 1 devient égale à celle de la ligne 2, puisque la meilleure direction pour l'interpolation sera forcément la direction verticale (SAD(0)=0).
La mesure de détail sera alors à 0 pour la ligne entière.
Pour la détection de mouvement, on remplace également l'information manquante C et C1 par B et B1 Si le mouvement est égal à 0, l'atténuateur sélectionnera l'interpolation temporelle ; sinon il sélectionnera l'interpolation spatiale.

**Dernière ligne luma du champ impair .**

De la même façon, pour l'interpolation spatiale de la dernière ligne du champ impair, dans le cas où N est pair, il manque l'information de la ligne en-dessous. On propose d'utiliser à la place l'information de la dernière ligne disponible, c'est-à-dire de la ligne N-1 si le nombre total de lignes est de N lignes par trame (N pair). La dernière ligne faisant l'objet d'une interpolation spatiale est égale à la ligne N-1.

**Premières et dernières lignes chroma.**

Dans le cas d'une chroma 4:2:2, on peut adopter le même principe que pour la luma. Cela signifie que l'on utilise l'information de la première ligne disponible au début du champ pair et la dernière ligne disponible à la fin du champ impair.
Dans le cas d'un chroma 4:2:0, on ne dispose pas de l'information pour l'interpolation de la ligne 1 des champs pairs et de la ligne (N-1) , ceci dans le champ impair si N est un multiple de 4, ou dans le champ pair si N n'est pas un multiple de 4. Pour l'interpolation de la ligne 1 dans le champ pair, on sait que l'interpolation spatiale de la luma sera dans la direction verticale. Donc, pour l'interpolation de la chroma, on peut utiliser la première information de chroma disponible pour remplacer la l'information manquante ; cela mène à une ligne 1 interpolée égale à la ligne 3 d'origine. Pour la ligne (N-1), la direction de l'interpolation calculée à partir de la luma n'est pas toujours verticale. Pour suivre sur la décision sur le chroma, on a :

si min(SAD)=SAD(0) alors UVs=UV(N-3,k)
si min(SAD)=SAD(1) alors UVs=(UV(N-3,k)+UV(N-3,k+2))/2
si min(SAD)=SAD(2) alors UVs=UV(N-3,k+2)
si min(SAD)=SAD(3) alors UVs=UV(N-3,k+4)
si min(SAD)=SAD(-1) alors UVs=(UV(N-3,k-2)+UV(N-3,k))/2
si min(SAD)=SAD(-2) alors UVs=UV(N-3,k-2)
si min(SAD)=SAD(-3) alors UVs1=UV(N-3,k-4).

En conclusion, on peut réaliser l'interpolation des premières ou dernières lignes en remplaçant les pixels manquants avec des pixels symétriques relativement à la position faisant l'objet d'une interpolation.

**Premier et dernier pixels d'une ligne.**

Pour une position de pixel à k≤2, on ne peut pas définir la fenêtre complète pour l'interpolation directionnelle spatiale.
On peut résoudre ce problème en remplaçant les pixels manquants par le premier pixel disponible pour le calcul du SAD et pour le calcul de la valeur interpolée. Les correspondances :

K=0 => vertical
K=±1 => ±26°
K±2 => ±45°
K±3 => ±63°

ne sont plus respectées, mais le SAD minimum correspondra encore à la meilleure direction objective pour l'interpolation.

On réalise la même initialisation pour les pixels chroma dans les colonnes impaires : l'éventuel pixel manquant dans la formule d'interpolation est remplacé par le premier pixel disponible.

Par exemple, pour le premier pixel à gauche (k=1), on calcule :

$$\text{SAD}(0) = 0.875 * |Y(n-1,1) - Y(n+1,1)| + 0.125 * |Y(n-1,2) - Y(n+1,2)|$$

$$\text{SAD}(1) = 0.5 * |Y(n-1,1) - Y(n-1,1) + 0.3125 * |Y(n-1,2) - Y(n+1,1) + 0.1875 * |Y(n-1,3) - Y(n+1,2)|$$

$$\text{SAD}(2) = 0.3125 * |Y(n-1,1) - Y(n+1,1)| + 0.375 * |Y(n-1,2) - Y(n+1,1)| + 0.3125 * |Y(n-1,3) - Y(n+1,1)|$$

$$\text{SAD}(3) = |Y(n-1,3) - Y(n+1,1)|$$

$$\text{SAD}(-1) = 0.5 * |Y(n+1,1) - Y(n-1,1)| + 0.3125 * |Y(n+1,2) - Y(n-1,1)| + 0.1875 * |Y(n+1,3) - Y(n-1,2)|$$

$$\text{SAD}(-2) = 0.3125 * |Y(n+1,1) - Y(n-1,1)| + 0.375 |Y(n+1,2) - Y(n-1,1)| + 0.3125 * |Y(n+1,3) - Y(n-1,2)|$$

$$\text{SAD}(-3) = |Y(n+1,3) - Y(n-1,1)|.$$

Si min(SAD)=SAD(-3) alors Ys1=(Y(n-1,1)+Y(n+1,3))/2.

Enfin Ys est donné par :

Ys=Ys1 si Ys1 est entre Y(n-1,1) et Y(n+1,1)
sinon Ys=(Y(n-1,1)+Y(n+1,1))/2.

Avec le chroma UVs1=(UV(n-1,1)+UV(n+1,3))/2.

Enfin, UVs est donné par :

UVs=UVs1 si UVs1 est entre UV(n-1,1) et UV(n+1,1)
sinon UVs=(UV(n-1,1)+UV(n+1,1))/2.

On applique le même principe pour les derniers pixels de la ligne : les pixels manquants sont remplacés par le dernier pixel disponible de la ligne.

Les performances des différents algorithmes proposés ont fait l'objet d'essais sur des séquences variées. Il en est ressorti que par rapport à d'autres systèmes de dé-entrelacement, l'algorithme proposé apporte des améliorations remarquables notamment sur des éléments sensibles tels que des logos, du texte statique ou défilant, et sur la netteté des transitions en mouvement .

Le système conforme à l'invention opère correctement même avec des images provenant de support sur film, et ce sans détection de film.

La détection de film est nécessaire dans la plupart des systèmes de dé-entrelacement afin d'éviter des pertes de résolution lorsque l'image provient de matériel film.

Dans le système conforme à l'invention, lorsque les images sont extraites de support sur film, on peut distinguer les cas suivants :

- dans les parties statiques, l'atténuateur tend vers une interpolation complètement temporelle, équivalente à une fusion locale des deux champs, équivalente au de-entrelacement classique de matériel film ;
- dans les parties de détails en mouvement, on tire avantage de l'interpolation directionnelle qui rend des résultats encore très proches de ceux d'une fusion des deux champs pour le matériel film. Le système exploite avantageusement le fait que l'oeil identifie surtout les limites d'objets dans les parties d'une image en mouvement.

Des systèmes sophistiqués à compensation vectorielle de mouvement permettent une reproduction un peu meilleure des détails en déplacement, mais sont bien plus coûteux et souffrent des faiblesses des systèmes de de-entrelacement nécessitant une détection de film.

**Revendications**

1. Procédé de dé-entrelacement d'un signal vidéo, dans lequel on produit en sortie (S) un signal (Sde) d'images vidéo dé-entrelacées par interpolation des pixels manquants du signal vidéo entrelacé présenté en entrée (E), l'interpolation sur ledit signal en sortie (Sde) étant réalisée sélectivement (10) à partir d'une interpolation spatiale (6) et d'une interpolation temporelle (8) avec prise de décision sur le degré variable de présence d'interpolation spatiale ou/et d'interpolation temporelle dans ledit signal (Sde) en sortie, ladite décision étant prise en fonction d'une détection de mouvement (4) dans une zone concernée de l'image, fournissant une mesure de fiabilité de l'interpolation temporelle,
   **caractérisé en ce que** l'interpolation spatiale (6) est réalisée sur la base d'une détermination de la direction, parmi un ensemble de directions considérées reliant des pixels sur des lignes différentes d'une fenêtre de pixels donnée, pour laquelle on obtient le minimum de différence entre les valeurs des pixels sur les lignes différentes ainsi reliés le long de cette direction, et **en ce que** ladite décision est prise en outre en fonction d'une détection du détail (2) fournissant une mesure de fiabilité de l'interpolation spatiale dans la zone concernée de l'image, ladite mesure de fiabilité de l'interpolation spatiale étant dérivée directement dudit minimum de différence.

2. Procédé selon la revendication 1, **caractérisé en ce que** ladite décision est prise pour chaque pixel individuel interpolé.

3. Procédé selon la revendication 1 ou 2, **caractérisé en ce que** l'une des directions considérées correspond à un angle de sensiblement 26° par rapport à la verticale, pour une géométrie à pas de pixel égal dans les sens vertical et horizontal.

4. Procédé selon l'une quelconque des revendications 1 à 3, **caractérisé en ce que** l'une des directions considérées correspond à un angle de sensiblement 63° par rapport la verticale, pour une géométrie à pas de pixel égal dans les sens vertical et horizontal.

5. Procédé selon l'une quelconque des revendications 1 à 4, **caractérisé en ce que** lorsqu'il existe plusieurs directions produisant le même minimum de différence entre les valeurs des pixels ainsi reliés, on sélectionne la direction verticale ou, le cas échéant, la direction la plus proche de la direction verticale.

6. Procédé selon l'une quelconque des revendications 1 à 5, **caractérisé en ce que** lorsqu'il existe deux directions symétriques diamétralement opposées produisant le même minimum de différence entre les valeurs des pixels ainsi reliés, et faisant en sorte qu'aucune des deux directions ne soit plus proche de la direction verticale que l'autre, on sélectionne à la place la direction verticale.

7. Procédé selon l'une quelconque des revendications 1 à 6, **caractérisé en ce que** l'interpolation spatiale (6) est réalisée sur la base d'un moyennage de valeurs de pixels, et **en ce que** l'on prend les mêmes positions de pixels pour déterminer à la fois le moyennage de la composante de luma (Y) du signal vidéo entrelacé en entrée et le moyennage de la composante de chroma, dans la mesure où les mêmes pixels sont disponibles pour les deux composantes.

8. Procédé selon l'une quelconque des revendications 1 à 7, **caractérisé en ce que** détermination est réalisée sur la composante luma (Y) du signal vidéo entrelacé en entrée, et **en ce que** la direction ainsi déterminée est également utilisée comme direction d'interpolation pour la composante chroma de ce signal vidéo.

9. Procédé selon l'une quelconque des revendications 1 à 8, **caractérisé en ce que** la détection de mouvement (4) est réalisée, pour un pixel donné (A), par un calcul récursif mettant en oeuvre un rebouclage (18, 20) d'une valeur intermédiaire de mouvement (M0) avec atténuation d'un facteur FA inférieur à 1.

10. Procédé selon la revendication 9, **caractérisé en ce que** la valeur de mouvement M est déterminée pour un pixel à interpoler X d'un champ m par application de l'algorithme suivant :

$$M0=\max(\lvert A-D \rvert, FA*M(N))$$

$$Mp=\min(M(N1), M(N1+1))$$

$$M=\max(M0, Mp);$$

où:

A est le pixel à la même position que le pixel X, mais dans le champ m+1,
D est le pixel à la même position que le pixel X, mais dans le champ m-1,
M(N) correspond a la valeur M0 calculée une trame avant, soit N lignes avant, N étant le nombre total de lignes,
M(N1) correspond à la valeur M0 calculée N1 lignes avant,
N1 = (N-1)/2 dans le cas où N est impair,
N1 = (N-2)/2 dans le cas où N est pair et où les lignes de luma à interpoler sont les 2èmes, 4èmes etc lignes de l'image,
N1 = N/2 dans le cas où N est pair et où les lignes de luma à interpoler sont les 1ères, 3èmes etc lignes de l'image,
M(N1+1) correspond à la valeur M0 calculée (N1+1) lignes avant, et FA est le facteur d'atténuation.

11. Procédé selon la revendication 9 ou 10, **caractérisé en ce que** le facteur d'atténuation FA est égal à 15/16.

12. Procédé selon l'une quelconque des revendications 1 à 11, **caractérisé en ce que** ladite pondération (10) est déterminée sur la base de la composante luma du signal vidéo.

13. Procédé selon la revendication 12, **caractérisé en ce que** ladite interpolation (10) déterminée sur la composante luma du signal vidéo est obtenue par l'algorithme suivant :

$$I=\mathrm{med}(s, t+M, t-M)$$

si M≤d
sinon I=s.
où I représente l'interpolation finale
s représente l'interpolation spatiale
t représente l'interpolation temporelle,
M représente la mesure de mouvement à la position à interpoler,
D représente la mesure de détail à la position à interpoler, et
med(a,b,c)représente la fonction median de a, b, c.

14. Procédé selon la revendication 12 ou 13, **caractérisé en ce que** la sélection (10) réalisée sur la base de la composante luma du signal est aussi appliquée à la composante chroma.

15. Procédé selon la revendication 14, **caractérisé en ce que** :

i) dans le cas où l'interpolation finale sur la luma est plus proche de l'interpolation temporelle, l'interpolation finale de la chroma est l'interpolation temporelle ; et/ou

ii) dans le cas où l'interpolation finale sur la luma est plus proche de l'interpolation spatiale, l'interpolation finale de la chroma est l'interpolation spatiale ; et/ou

iii) lorsque les interpolations spatiale et temporelle ont une égale contribution dans l'interpolation finale de la luma, les interpolations spatiale et temporelle ont une égale contribution dans l'interpolation finale de la chroma.

16. Appareil (1) de dé-entrelacement d'un signal vidéo, produisant en sortie (S) un signal (Sde) d'images vidéo dé entrelacées par interpolation des pixels manquants du signal vidéo entrelacé présenté en entrée (E), l'appareil comprenant des moyens (10) pour réaliser l'interpolation sur ledit signal (Sde) en sortie par composition sélective à partir d'une interpolation spatiale (6) et d'une interpolation temporelle (8) avec prise de décision sur le degré variable de présence d'interpolation spatiale et/ou d'interpolation temporelle dans ledit signal (Sde) en sortie, ces moyens prenant ladite décision en fonction d'une détection de mouvement (4) dans une zone concernée de l'image, fournissant une mesure de fiabilité de l'interpolation temporelle,

**caractérisé en ce que** l'interpolation spatiale (6) est réalisée sur la base d'une détermination de la direction, parmi un ensemble de directions considérées reliant des pixels sur des lignes différentes d'une fenêtre de pixels donnée, pour laquelle on obtient le minimum de différence entre les valeurs des pixels sur les lignes différentes ainsi reliés le long de cette direction, et **en ce que** lesdits moyens (10) prennent ladite décision en outre en fonction d'une détection du détail (2) fournissant une mesure de fiabilité de l'interpolation spatiale dans la zone concernée de l'image, ladite mesure de fiabilité de l'interpolation spatiale étant dérivée directement dudit minimum de différence.

17. Appareil selon la revendication 16, **caractérisé en ce que** lesdits moyens (10) déterminent la pondération pour chaque pixel individuel interpolé.

18. Appareil selon la revendication 16 ou 17, **caractérisé en ce qu'**il comprend des moyens programmés pour réaliser le procédé selon l'une quelconque des revendications 1 à 15.

19. Appareil de visualisation vidéo à affichage par balayage séquentiel pouvant fonctionner à partir de signaux vidéo entrelacés en entrée, **caractérisé en ce qu'**il comprend un appareil selon l'une quelconque des revendications 16 à 18 pour réaliser le dé-entrelacement permettant d'obtenir les signaux de balayage séquentiel.

**Claims**

1. Method for de-interlacing a video signal, wherein there is produced at output (S) a signal (sde) of de-interlaced video images by interpolating the pixels missing from the interlaced video signal presented at input (E), the interpolation on said output signal (Sde) being made selectively (10) from a spatial interpolation (6) and a temporal interpolation (8) with a decision being made on the variable degree of presence of spatial interpolation and/or of temporal interpolation in said output signal (Sde), said decision being taken as a function of a detection of motion (4) in a relevant area of the image, giving a measure of the reliability of the temporal interpolation,**characterised in that** the spatial interpolation (6) is made on the basis of a determination of the direction, among a series of directions under consideration connecting pixels on different lines of a given pixel window, for which the difference minimum is obtained between the values of the pixels on the different lines so connected along this direction, and **in that** said decision is made additionally as a function of a detection of the detail (2) giving a measure of the reliability of the spatial interpolation in the relevant area of the image, said measure of the reliability of the spatial interpolation being directly derived from said difference minimum.

2. Method according to claim 1, **characterised in that** said decision is made in respect of each individual interpolated pixel.

3. Method according to claim 1 or 2, **characterised in that** one of the directions under consideration corresponds to an angle of approximately 26° relative to the vertical, for a geometry with a pixel pitch equal in the vertical and horizontal directions.

4. Method according to any one of claims 1 to 3, **characterised in that** one of the directions under consideration corresponds to an angle of approximately 63° relative to the vertical, for a geometry with a pixel pitch equal in the vertical and horizontal directions.

**5.** Method according to any one of claims 1 to 4, **characterised in that** when there are several directions producing the same minimum difference between the values of the pixels so connected, the vertical direction or, where appropriate, the direction closest to the vertical direction is selected.

**6.** Method according to any one of claims 1 to 5, **characterised in that** when there are two diametrically opposed symmetrical directions producing the same difference minimum between the values of the pixels so connected, and arranging things so that neither of the two directions is closer to the vertical direction than the other, the vertical direction is selected instead.

**7.** Method according to any one of claims 1 to 6, **characterised in that** the spatial interpolation (6) is made on the basis of an averaging of pixel values, and **in that** the same pixel positions are taken to determine both the averaging of the luma component (Y) of the interlaced input video signal and the averaging of the chroma component, insofar as the same pixels are available for the two components.

**8.** Method according to any one of claims 1 to 7, **characterised in** the determination is made on the luma component (Y) of the interlaced input video signal, and **in that** the direction so determined is also used as the interpolation direction for the chroma component of this video signal.

**9.** Method according to any one of claims 1 to 8, **characterised in that** the motion detection (4) is carried out, for a given pixel (A), by a recursive calculation implementing an intermediate motion value (M0) loop (18,20) with attenuation by a factor FA of less than 1.

**10.** Method according to claim 9, **characterised in that** the motion value M is determined for a pixel to be interpolated X of a field m by application of the following algorithm:

$$M0=\max(|A-D|, FA*M(N))$$

$$Mp=\min(M(N1), M(N1+1))$$

$$M=\max(M0, Mp):$$

where:

A is the pixel in the same position as the pixel X, but in the field m+1,
D is the pixel in the same position as the pixel X, but in the field m-1,
M(N) equates to the value M0 calculated one frame before, i.e. N lines before, with N being the total number of lines in the image.
M(N1) equates to the value M0 calculated N1 lines before,
N1 = (N-1)/2 in the event of N being odd-numbered
N1 = (N-2)/2 in the event of N being even-numbered and the luma lines to be interpolated being the 2nd, 4th, etc. lines of the image,
N1 = N/2 in the event of N being even-numbered and the luma lines to be interpolated being the 1st, 3rd etc. lines of the image,
M(N1+1) equates to the value M0 calculated (N+1) lines before, and
FA is the attenuation factor.

**11.** Method according to claim 9 or 10, **characterised in that** the attenuation factor FA is equal to 15/16.

**12.** Method according to any one of claims 1 to 11, **characterised in that** said weighting (10) is determined on the basis of the luma component of the video signal.

**13.** Method according to claim 12, **characterised in that** said interpolation (10) determined on the luma component of the video signal is obtained by the following algorithm:

$$I=\mathrm{med}(s,t+M,t-M) \quad \text{if } M\leq d$$

otherwise I=s,
where I represents the final interpolation
s represents the spatial interpolation
t represents the temporal interpolation
M represents the motion measurement at the position to be interpolated,
D represents the detail measurement at the position to be interpolated and
med (a,b,c) represents the median function of a,b,c.

14. Method according to claim 12 or 13, **characterised in that** the selection (10) made on the basis of the luma component of the signal is also applied to the chroma component.

15. Method according to claim 14, **characterised in that**:

i) in the event of the final interpolation on the luma being closer to the temporal interpolation, the final interpolation of the chroma is the temporal interpolation; and/or
ii) in the event of the final interpolation on the luma being closer to the spatial interpolation, the final interpolation of the chroma is the spatial interpolation; and/or
iii) when the spatial and temporal interpolations have an equal contribution in the final interpolation of the luma, the spatial and temporal interpolations have an equal contribution in the final interpolation of the chroma.

16. Device (1) for de-interlacing a video signal, producing at output (S) a signal (Sde) of de-interlaced video images by interpolating the pixels missing from the interlaced video signal presented at input (E), the device including means (10) to make the interpolation on said output signal (Sde) by selective composition from a spatial interpolation (6) and a temporal interpolation (8) with a decision being made on the variable degree of presence of spatial interpolation and/or temporal interpolation in said output signal (Sde), these means making said decision as a function of a detection of motion (4) in a relevant area of the image, supplying a measure of reliability of the temporal interpolation, **characterised in that** the spatial interpolation (6) is made on the basis of a determination of the direction, among a series of directions under consideration connecting pixels on different lines of a given pixel window, for which the difference minimum is obtained between the values of the pixels on the different lines so connected along this direction, and **in that** said means (10) make said decision additionally as a function of a detection of the detail (2) ) giving a measure of the reliability of the spatial interpolation in the relevant area of the image, said measure of the reliability of the spatial interpolation being directly derived from said difference minimum.

17. Device according to claim 16, **characterised in that** said means (10) determine the weighting for each individual interpolated pixel.

18. Device according to claim 16 or 17, **characterised in that** it includes programmed means for carrying out the method according to any one of claims 1 to 15.

19. Video display device with display by sequential scanning able to function from interlaced input video signals, **characterised in that** it includes a device according to any one of claims 16 to 18 so as to bring about the de-interlacing that allows the sequential scanning signals to be obtained.

**Patentansprüche**

1. Verfahren zur Unterdrückung eines Zeilensprungs eines Videosignals, in welchem am Ausgang (S) durch Interpolation von fehlenden Pixeln des am Eingang (E) anliegenden Videosignals mit Zeilensprung ein Videobild-Signal (Sde) mit unterdrücktem Zeilensprung erzeugt wird, wobei die Interpolation an dem Signal am Ausgang (Sde) ausgehend von einer räumlichen Interpolation (6) und einer zeitlichen Interpolation (8) mit einer Entscheidung über den veränderlichen Grad des Vorhandenseins der räumlichen Interpolation und/oder zeitlichen Interpolation in dem Signal (Sde) am Ausgang selektiv (10) ausgeführt wird, wobei die Entscheidung in Abhängigkeit von einer Bewegungsdetektion (4) in einem betreffenden Bereich des Bildes getroffen wird, was ein Maß der Zuverlässigkeit der zeitlichen Interpolation liefert,

**dadurch gekennzeichnet,**
**dass** die räumliche Interpolation (6) auf der Basis einer Bestimmung der Richtung aus einer Gruppe von in Betracht kommenden Richtungen, welche Pixel auf unterschiedlichen Zeilen eines gegebenen Pixelfensters verbinden, durchgeführt wird, für die der Minimum-Unterschied zwischen den Werten der Pixel auf den unterschiedlichen Zeilen erhalten wird, die so entlang dieser Richtung verbunden sind, und **dadurch**, dass die Entscheidung ferner in Abhängigkeit von einer Detaildetektion (2) getroffen wird, welche ein Maß der Zuverlässigkeit der räumlichen Interpolation in dem betreffenden Bereich des Bildes liefert, wobei das Maß der Zuverlässigkeit der räumlichen Interpolation direkt von dem Minimum-Unterschied hergeleitet wird.

2. Verfahren nach Anspruch 1, **dadurch gekennzeichnet, dass** die Entscheidung für jedes interpolierte individuelle Pixel getroffen wird.

3. Verfahren nach Anspruch 1 oder 2, **dadurch gekennzeichnet, dass** eine der in Betracht kommenden Richtungen mit einem Winkel von im wesentlichen 26° Grad in Bezug zur Vertikalen korrespondiert, für eine Geometrie mit gleichem Pixelschritt in vertikaler und horizontaler Richtung.

4. Verfahren nach einem der Ansprüche 1 bis 3, **dadurch gekennzeichnet, dass** eine der betreffenden Richtungen einem Winkel von im wesentlichen 63° Grad in Bezug zur Vertikalen entspricht, für eine Geometrie mit einem gleichen Pixelschritt in vertikaler und horizontaler Richtung.

5. Verfahren nach einem der Ansprüche 1 bis 4, **dadurch gekennzeichnet, dass**, wenn mehrere Richtungen existieren, welche die gleiche Minimum-Differenz zwischen den Werten der so verbundenen Pixel erzeugen, die vertikale Richtung oder gegebenenfalls die der vertikalen Richtungen nächstliegende Richtung ausgewählt wird.

6. Verfahren nach einem der Ansprüche 1 bis 5, **dadurch gekennzeichnet, dass**, wenn zwei diametral gegenüberliegende symmetrische Richtungen existieren, welche denselben Minimum-Unterschied zwischen den Werten der so verbundenen Pixel erzeugen, und zwar so, dass keine der beiden Richtungen näher an der vertikalen Richtung liegt als die andere, statt dessen die vertikale Richtung ausgewählt wird.

7. Verfahren nach einem der Ansprüche 1 bis 6, **dadurch gekennzeichnet, dass** die räumliche Interpolation (6) auf der Basis einer Mittelwertbildung der Pixelwerte durchgeführt wird und dass die gleichen Pixelpositionen genommen werden, um gleichzeitig den Mittelwert des Luma-Bestandteils (Y) des Videosignals mit Zeilensprung am Eingang und den Mittelwert des Chroma-Bestandteils zu bestimmen, und zwar in dem Maße, in welchem die gleichen Pixel für die beiden Bestandteile verfügbar sind.

8. Verfahren nach einem der Ansprüche 1 bis 7, **dadurch gekennzeichnet, dass** die Bestimmung über den Luma-Bestandteil (Y) des Videosignals mit Zeilensprung am Eingang ausgeführt wird und dass die so bestimmte Richtung auch als Interpolationsrichtung für den Chroma-Bestandteil dieses Videosignals verwendet wird.

9. Verfahren nach einem der Ansprüche 1 bis 8, **dadurch gekennzeichnet, dass** die Bewegungsdetektion (4) für ein gegebenes Pixel (A) durch Rekursivberechnung durchgeführt wird, die eine Schleife (80, 20) eines Bewegungs-Zwischenwertes (M0) mit einer Verstärkung eines Faktors FA kleiner 1 implementiert.

10. Verfahren nach Anspruch 9, **dadurch gekennzeichnet, dass** der Bewegungswert M für ein zu interpolierendes Pixel X eines Feldes m durch Anwendung des folgenden Algorithmus bestimmt wird:

$$M0 = \max\left(|A-D|\ FA*M(N)\right)$$

$$Mp = \min\left(M(N1),\ M(N1+1)\right)$$

$$M = \max(M0,\ Mp);$$

in welchem:

A das Pixel an der gleichen Position wie das Pixel X ist, aber im Feld m+1,

D das Pixel an der gleichen Position wie das Pixel X ist, aber im Feld m-1,

M (N) dem im vorhergehenden Teilbild berechneten Wert M0 entspricht, nämlich N Zeilen vorher, wobei N die Gesamtzahl von Zeilen ist,

M (N1) dem N1 Zeilen vorher berechneten Wert M0 entspricht,

N 1 = (N-1) /2 im Falle, in welchem N ungerade ist,

N1 = (N-2) /2 im Falle, in welchem N gerade ist und in welchem die zu interpolierenden Luma-Zeilen die zweite, vierte etc. Zeile des Bildes sind,

N1 = N/2 in dem Falle, in welchem N gerade ist und in welchem die zu interpolierenden Luma-Zeilen die erste, dritte etc. Zeile des Bildes sind,

M (N1+1) dem (N1+1) Zeilen vorher berechneten Wert M0 entspricht und FA der Verstärkungsfaktor ist.

**11.** Verfahren nach Anspruch 9 oder 10, **dadurch gekennzeichnet, dass** der Verstärkungsfaktor FA gleich 15/16 ist.

**12.** Verfahren nach einem der Ansprüche 1 bis 11, **dadurch gekennzeichnet, dass** die Gewichtung (10) auf der Basis des Luma-Bestandteils des Videosignals bestimmt wird.

**13.** Verfahren nach Anspruch 12, **dadurch gekennzeichnet, dass** die an dem Luma-Bestandteil des Videosignals bestimmte Interpolation (10) durch folgenden Algorithmus bestimmt wird:

$$I = \text{med} \ (s, \ t+M, \ t-M), \ \text{wenn} \ M \leq d$$

andernfalls I = s.

in welchem I die finale Interpolation repräsentiert

s die räumliche Interpolation repräsentiert

t die zeitliche Interpolation repräsentiert,

M das Maß der Bewegung an der zu interpolierenden Position repräsentiert

D das Maß des Details an der zu interpolierenden Position repräsentiert, und

med (a, b, c) die Medianfunktion von a, b, c repräsentiert.

**14.** Verfahren nach Anspruch 12 oder 13, **dadurch gekennzeichnet, dass** die Auswahl (10), die auf der Basis des Luma-Bestandteils des Signals durchgeführt wird, auch auf den Chroma-Bestandteil angewendet wird.

**15.** Verfahren nach Anspruch 14, **dadurch gekennzeichnet, dass**:

i) in dem Fall, in welchem die finale Interpolation auf das Luma näher an der zeitlichen Interpolation ist, die finale Interpolation des Chroma die zeitliche Interpolation ist; und/oder

ii) in dem Falle, in welchem die finale Interpolation an dem Luma viel näher an der räumlichen Interpolation ist, die finale Interpolation des Chroma die räumliche Interpolation ist; und/oder

iii) wenn die räumliche und die zeitliche Interpolation einen gleichen Beitrag in der finalen Interpolation des Luma haben, die räumliche und die zeitliche Interpolation einen gleichen Beitrag in der finalen Interpolation des Chroma haben.

**16.** Vorrichtung (1) zur Unterdrückung eines Zeilensprungs eines Videosignals, das am Ausgang (S) durch Interpolation von Pixeln, die dem am Eingang (E) vorhandenen Videosignal mit Zeilensprüngen fehlen, ein Videobildsignal (Sde) ohne Zeilensprünge erzeugt, wobei die Vorrichtung Mittel (10) umfasst, um die Interpolation des Signals (Sde) am Ausgang durch selektive Zusammensetzung ausgehend von einer räumlichen Interpolation (6) und einer zeitlichen Interpolation (8) mit einer Entscheidung über den veränderlichen Grad des Vorhandenseins einer räumlichen Interpolation und/oder zeitlichen Interpolation in dem Signal (Sde) am Ausgang durchzuführen, wobei diese Mittel die Entscheidung in Abhängigkeit von einer Bewegungsdetektion (4) in einem betreffenden Bereich des Bildes treffen, was ein Maß der Zuverlässigkeit der zeitlichen Interpolation liefert,

**dadurch gekennzeichnet, dass** die räumliche Interpolation (6) auf der Basis einer Bestimmung der Richtung aus einer Gruppe von in Betracht kommenden Richtungen, welche Pixel auf unterschiedlichen Zeilen eines gegebenen Pixelfensters verbinden, durchgeführt wird, für die der Minimum-Unterschied zwischen den Werten der Pixel auf den unterschiedlichen Zeilen erhalten wird, die so entlang dieser Richtung verbunden sind, und **dadurch**, dass die Entscheidung ferner in Abhängigkeit von einer Detaildetektion (2) getroffen wird, welche ein Maß der Zuverlässigkeit der räumlichen Interpolation in dem betreffenden Bereich des Bildes liefert, wobei das Maß der Zuverlässigkeit der räumlichen Interpolation direkt von dem Minimum-Unterschied hergeleitet wird.

17. Vorrichtung nach Anspruch 16, **dadurch gekennzeichnet, dass** die Mittel (10) die Gewichtung für jedes interpolierte individuelle Pixel bestimmen.

18. Vorrichtung nach Anspruch 16 oder 17, **dadurch gekennzeichnet, dass** diese programmierte Mittel umfasst, um das Verfahren gemäß einem der Ansprüche 1 bis 15 durchzuführen.

19. Vorrichtung zur Videobildanzeige durch sequentielle Abtastung, die ausgehend von Videosignalen mit Zeilensprüngen am Eingang arbeiten kann, **dadurch gekennzeichnet, dass** diese eine Vorrichtung nach einem der Ansprüche 16 bis 18 umfasst, um die Unterdrückung eines Zeilensprungs durchzuführen, die ermöglicht, die sequentiellen Abtastsignale zu erhalten.

**Fig. 1**

**Fig. 2**

**Fig. 3**

Direction vertical

**Fig. 4a**

Direction diagonal +26°

**Fig. 4b**

Direction diagonal +45°

**Fig. 4c**

Direction diagonal +63°

**Fig. 4d**

k-2    k-1    k    k+1    k+2

——————————————————— Ligne n-1

——————————————————— Ligne n

——————————————————— Ligne n+1

Direction diagonal -26°

## Fig. 4e

k-2    k-1    k    k+1    k+2

——————————————————— Ligne n-1

——————————————————— Ligne n

——————————————————— Ligne n+1

Direction diagonal -45°

## Fig. 4f

k-2    k-1    k    k+1    k+2

——————————————————— Ligne n-1

——————————————————— Ligne n

——————————————————— Ligne n+1

Direction diagonal -63°

## Fig. 4g

Champ m-3   Champ m-2   Champ m-1   Champ m   Champ m+1

C1 ● — C ●   Ligne n-1

D1 ●   D ●   X   A ●   Ligne n

B1 ●   B ●   Ligne n+1

**Fig. 5**

12

Retard : 1 image

A →

| Retard de N1 lignes | 1D (1 ligne) | Retard de N-N1-1 lignes |

D

14

|A-D| Unité diff. absolue

16b   16

16a

Unité valeur MAX.

16c

Unité facteur atténuation FA valeur mouvement FA<1 F=15/16 par défaut

20

M(N)

Retard : 1 image

| Retard de N-N1-1 lignes | 1D (1 ligne) | Retard de N1 lignes |

18   M(N1+1)   22b   M(N1)

22c

Unité valeur Min.

22   22a

21   21a

21b

Unité valeur MAX.

→ M

21c

**Fig. 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5943099 A
- US 5936676 A